# EUROPÄISCHE PATENTANMELDUNG

(11) **EP 2 187 125 A1**
(43) Veröffentlichungstag der Anmeldung: **19.05.2010**
(21) Anmeldenummer: 08016788.5
(22) Anmeldetag: 24.09.2008
(51) Int. Cl.: F23M 99/00, F23R 3/00, F23R 3/28

(54) **Vorrichtung und Verfahren zur Dämpfung von Verbrennungsschwingungen**

(71) Anmelder: Siemens Aktiengesellschaft, 80333 München (DE)
(72) Erfinder: Hase, Matthias, Dr., 45470 Mülheim an der Ruhr (DE); Huth, Michael, Dr., 45239 Essen (DE); Prade, Bernd, Dr., 45479 Mülheim (DE)

(57) **Zusammenfassung**

Die Erfindung betrifft eine Vorrichtung zur Dämpfung von Verbrennungsschwingungen in einer Brennkammer, wobei mindestens ein an oder/und im Brenner angebrachter Hohlraum (5,40) vorhanden ist, welcher mit dem Brenner (1,100) und/oder der Brennkammer (4,112) derart verbunden ist, so dass sich in dem mindestens einen Hohlraum (5,40) Schwingungen ausbilden, welche zur Dämpfung der thermoakustischen Brennkammerschwingung verwendbar sind und wobei der mindestens eine vorhandene Hohlraum (5,40) mit Spülluft (13,113) kühlbar ist. Weiterhin betrifft die Erfindung ein Verfahren zur Dämpfung von Verbrennungsschwingungen.

## Beschreibung

Die Erfindung betrifft eine Vorrichtung zur Dämpfung von Verbrennungsschwingungen in einer Brennkammer. Weiterhin betrifft die Erfindung ein Verfahren, welches sich mittels der Vorrichtung durchführen lässt.

In Verbrennungssystemen wie Gasturbinen, Flugtriebwerken, Raketenmotoren und Heizungsanlagen kann es zu thermoakustisch induzierten Verbrennungsschwingungen kommen. Diese entstehen durch eine Wechselwirkung der Verbrennungsflamme und der damit verbundenen Wärmefreisetzung mit akustischen Druckschwankungen. Durch eine akustische Anregung kann die Lage der Flamme, die Flammenfrontfläche oder die Gemischzusammensetzung schwanken, was wiederum zu Schwankungen der Wärmefreisetzung führt. Bei konstruktiver Phasenlage kann es zu einer positiven Rückkopplung und Verstärkung kommen. Eine so verstärkte Verbrennungsschwingung kann zu erheblichen Lärmbelastungen und Schädigungen durch Vibrationen führen.

Wesentlich beeinflusst werden diese thermoakustisch hervorgerufenen Instabilitäten durch die akustischen Eigenschaften des Brennraumes und die am Brennraumeintritt und Brennraumaustritt sowie an den Brennkammerwänden vorliegenden Randbedingungen. Die akustischen Eigenschaften können durch den Einbau von Helmholtzresonatoren verändert werden.

Die WO 93/10401 A1 zeigt eine Einrichtung zur Unterdrückung von Verbrennungsschwingungen in einer Brennkammer einer Gasturbinenanlage. Ein Helmholtzresonator ist mit einer Brennstoffzuführleitung strömungstechnisch verbunden. Die akustischen Eigenschaften der Zuführleitung bzw. des akustischen Gesamtsystems werden hierdurch so verändert, dass Verbrennungsschwingungen unterdrückt werden. Es hat sich allerdings gezeigt, dass diese Maßnahme nicht in allen Betriebszuständen ausreicht, da es auch bei einer Unterdrückung von Schwingungen in der Brennstoffleitung zu Verbrennungsschwingungen kommen kann.

Die WO 03/074936A1 zeigt eine Gasturbine, mit einem Brenner, der in eine Brennkammer mündet, wobei diese Mündung ringförmig von einem Helmholtzresonator umgeben ist. Hierdurch werden Verbrennungsschwingungen durch engen Kontakt zur Flamme effektiv gedämpft, wobei gleichzeitig Temperaturungleichmäßigkeiten vermieden werden. In dem Helmholzresonator sind Röhrchen angebracht, welche eine Frequenzanpassung bewirken.

In der EP 0 597 138 A1 ist eine Gasturbinen-Brennkammer beschrieben, die im Bereich der Brenner luftgespülte Helmholtzresonatoren aufweist. Die Resonatoren sind alternierend an der Stirnseite der Brennkammer zwischen den Brennern angeordnet. Durch diese Resonatoren wird Schwingungsenergie von in der Brennkammer auftretenden Verbrennungsschwingungen absorbiert und die Verbrennungsschwingungen werden hierdurch gedämpft.

Jeder dieser Resonatoren weist funktionsbedingt eine verbindende Öffnung mit der Brennkammer auf, die durch eine bestimmte Luftmenge gesperrt werden muss. Diese Luftmenge steht, bei Anbringung der Resonatoren an der Brennkammerwand, anschließend nicht mehr für die Verbrennung zur Verfügung, da sie am Brenner vorbeigeführt wird. Damit werden die Flammentemperatur sowie die NOx-Emissionen erhöht.

Die Aufgabe der vorliegenden Erfindung ist daher die Angabe einer Vorrichtung, welche zur Dämpfung von Verbrennungsschwingungen einsetzbar ist und welche die obige Problematik vermeidet. Eine weitere Aufgabe ist die Angabe eines Verfahrens, welches zur Dämpfung von Verbrennungsschwingungen einsetzbar ist und welches obige Problematik vermeidet.

Die auf die Vorrichtung bezogenen Aufgabe wird gelöst durch die Angabe einer Vorrichtung zur Dämpfung von Verbrennungsschwingungen in einer Brennkammer, wobei mindestens ein an oder/und im Brenner angebrachter Hohlraum vorhanden ist, welcher mit dem Brenner und/oder der Brennkammer derart verbunden ist, so dass sich in dem mindestens einen Hohlraum Schwingungen ausbilden, welche zur Dämpfung der thermoakustischen Brennkammerschwingung verwendbar sind und wobei der mindestens eine vorhandene Hohlraum mit Spülluft kühlbar ist.

Erstmals wird somit vorgeschlagen, einen bereits vorhandenen Hohlraum zu nutzen, welcher sich im oder/und an der Brennkammer oder/und im oder/und am Brenner befindet. Dieser wird derart mit der Brennkammer verbunden, dass er durch die Brennkammerschwingung selber angeregt wird und somit eine Resonatorschwingung ausbildet, die eine Dämpfung der thermoakustischen Brennkammerschwingung bewirkt. Die Erfindung hat erkannt, dass bei Resonatoren, die an der Brennkammerwand angebracht sind, die Kühlluft, welche der Verbrennungsluft abgezweigt wird, am Brenner vorbeigeleitet wird. Diese wird anschließend lediglich teilweise bei der Kühlung der Resonatoren in die Brennkammer geleitet, wo sie einem bereits fortgeschrittenem Verbrennungsprozess zugeführt wird (Sperrluft). Ein Teil der Luft nimmt jedoch nicht an der Verbrennung teil, steht also der Verbrennung gar nicht zur Verfügung. Diese Gründe führen jedoch zu einer erhöhten Flammentemperatur in der Brennkammer und zu erhöhten NOx Emissionen. Die Erfindung verwendet dagegen einen im/am Brenner vorhandenen Hohlraum und deren Volumen als Resonatorvolumen. Die Kühlluft, welche nun auch als Spülluft des Hohlraums fungiert, steht somit nach Kühlung des Hohlraums direkt der Verbrennung zur Verfügung. Es ist somit nicht notwendig Verbrennungsluft als Sperrluft abzuzweigen und am Brenner vorbeizuleiten. Die gesamte Verbrennungsluft steht somit der Verbrennung zur Verfügung. Ein weiterer Vorteil ist, dass die verwendeten "Resonatoren" bereits vorhanden sind, das heißt Resonatoranbauten vermieden werden.

Bevorzugt ist der mindestens eine vorhandene Hohlraum durch mindestens ein Loch mit der Brennkammer verbunden. Dabei wirkt das mindestens eine Loch als Resonatorhals.

In bevorzugter Ausgestaltung ist das mindestens eine Loch eine Bohrung. Dies lässt sich besonders einfach und auch nachträglich noch realisieren.

In bevorzugter Ausgestaltung ist der mindestens eine vorhandene Hohlraum durch Prallkühlung und/oder Konvektivkühlung kühlbar. Dabei wird die Verbrennungsluft einfach als Kühlluft in den Hohlraum eingebracht und spült sozusagen den Hohlraum aus, und wird anschließend unmittelbar in die Brennkammer eingebracht, um dort an der Verbrennung teilzunehmen.

Bevorzugt ist der mindestens eine Hohlraum unterteilbar, so dass verschiedene Schwingungsfrequenzen gedämpft werden. Die dabei entstehenden Hohlräume, welche dabei im Bereich von einigen Litern liegen, dämpfen somit die mittleren Frequenzen (TDF)(50-500Hz). Durch die Unterteilung von dem mindestens einem Hohlraum z.B. durch den Einsatz von Resonatoreinsätzen wie z.B. Röhrchen in verschiedenen Längen und Breiten können Schwingungen verschiedener Frequenzen gedämpft werden. Durch die Unterteilung des Hohlraums wird dabei zudem die Dämpfung hochfrequenter Schwingungen (HFD) möglich.

In bevorzugter Ausgestaltung ist der mindestens eine Hohlraum an der der Brennkammer zugewandten Umfangsseite des Brenners angeordnet. Dabei ist auch eine Ausdehnung des Hohlraums über die Umfangsseite möglich.

Bevorzugt sind mindestens zwei Hohlräume vorgesehen, die ein gleich großes Volumen aufweisen. Bevorzugt ist diese Vorrichtung in einer Gasturbine einsetzbar.

Bevorzugt ist der mindestens eine Hohlraum als Helmholzresonator oder Lamda/4 Resonator (röhrchenförmiger Resonator) ausgestaltet. Lambda/4 Resonatoren unterscheiden sich von Helmholzresonatoren unter anderem in ihrer akustischen Funktionsweise. Dieser Unterschied liegt vor allem in der gleichzeitig in Erscheinung tretenden Masse und Kompressibilität der Luft im Resonator und kann daran erkannt werden, dass bei den lambda/4-Resonatoren die Resonanzfrequenz direkt durch die stehende Welle bestimmt wird, deren Wellenlänge ein Viertel der Länge des röhrchenförmigen Resonators ist, während die akustische Funktionsweise und Resonanz von Helmholtzresonatoren durch ein Feder-Masse-System beschrieben und berechnet wird.

Die auf das Verfahren bezogene Aufgabe wird erfindungsgemäß gelöst durch die Angabe eines Verfahrens zur Dämpfung von Verbrennungsschwingungen in einer Brennkammer, wobei mindestens ein an oder/und im Brenner angebrachter Hohlraum vorhanden ist, welcher mit dem Brenner und/oder Brennkammer derart verbunden ist, dass sich in dem mindestens einen Hohlraum Schwingungen ausbilden, welche zur Dämpfung der Brennkammerschwingungen verwendet werden und wobei der mindestens eine vorhandene Hohlraum mit Spülluft gekühlt wird.

Die Erfindung wird beispielhaft und teilweise schematisch anhand der Zeichnung erläutert. Es zeigen:
- FIG 1: Querschnitt durch einen Brenner mit erfindungsgemä-ßem als Resonator ausgebildetem Hohlraum,
- FIG 2: einen Querschnitt durch einen erfindungsgemäßen als Resonator ausgebildeten Hohlraum,
- FIG 3a,b: einen Querschnitt durch einen erfindungsgemäßen als Resonator ausgebildeten Hohlraum mit verschiedenen Resonatoreinsätzen,
- FIG 4: einen Querschnitt durch einen erfindungsgemäßen als Resonator ausgebildeten Hohlraum mit Kühllufteinsatz,
- FIG 5: einen Querschnitt durch einen als Resonator ausgebildeten Hohlraum mit Pilotbrenner,
- FIG 6: einen Querschnitt durch ein can/can-annular Brennersystem nach dem Stand der Technik,
- FIG 7: einen Querschnitt durch einen Brenner mit erfindungsgemäßem als Resonator ausgebildetem Hohlraum,
- FIG 8: einen Querschnitt durch einen Brenner mit erfindungsgemäßen als Resonator ausgebildetem Hohlraum und axialer Unterteilung,
- FIG 9: einen Querschnitt durch einen Brenner mit erfindungsgemäßen als Resonator ausgebildetem Hohlraum und Grenzschichtabsaugungsposition,
- FIG 10: einen Querschnitt durch einen Brenner mit erfindungsgemäßen als Resonator ausgebildeten Hohlraum und alternativer Grenzschichtabsaugungsposition,
- FIG 11: einen Querschnitt durch einen Brenner mit erfindungsgemäßen als Resonator ausgebildetem Hohlraum und Einsatz,
- FIG 12: einen Querschnitt durch Brenner mit erfindungsgemä-ßen als Resonator ausgebildetem Hohlraum und Hauptdrallerzeugerverlängerung.

Gleiche Bezugszeichen haben in den verschiedenen Figuren die gleiche Bedeutung.

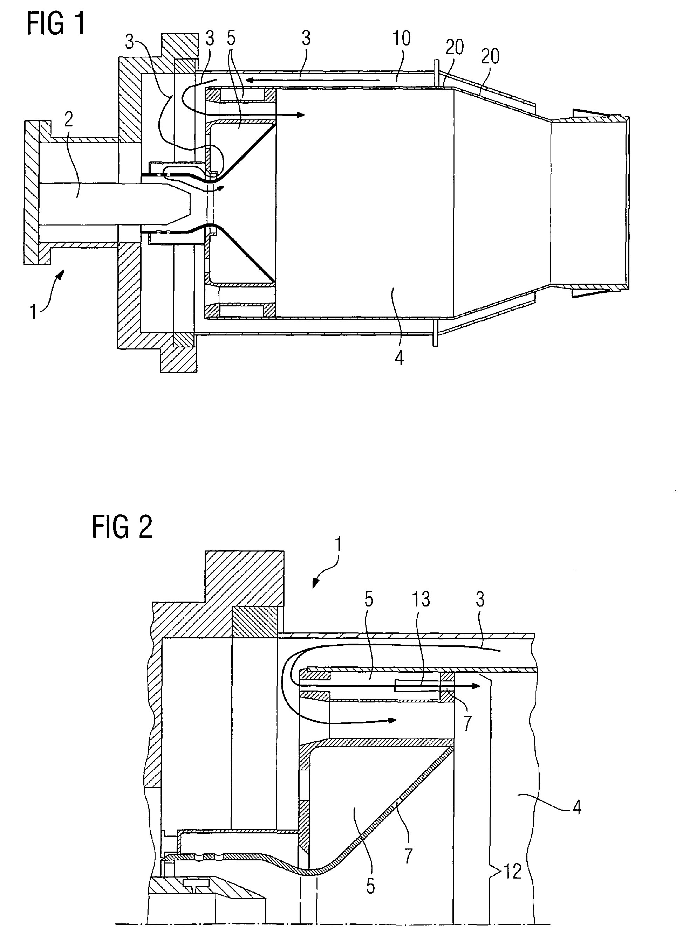

Figur 1 und Figur 2 zeigt einen Brenner 1, welcher einen Pilotbrenner 2 aufweist. Dieser ist an eine Brennkammer 4 angeschlossen. Verbrennungsluft 3 wird in die Brennkammer 4 eingeblasen. Die Verbrennungsluft wird teilweise mittels eines Zuführkanals 10 eingeblasen. Die Verbrennungsluft 3 wird dabei erwärmt, indem sie die Brennkammer 4 von außen konvektiv kühlt. Dies hat den Vorteil der Erwärmung der Verbrennungsluft 3 sowie der gleichzeitigen Kühlung der Brennkammer 4. Figur 2 zeigt eine mögliche Position für die Anbringung eines Resonators in einem Hohlraum 5. Hier ist der Brenner 1 als Strahlbrenner ausgebildet, d.h. ihm liegt eine flammenlose Oxidation zugrunde. Die Verbrennungsluft 3 selber wird durch den als Resonator ausgebildeten Hohlraum 5 der Brennkammer 4 zugeführt und kühlt damit den als Resonator ausgebildeten Hohlraum 5 als Spülluft 13. Daher ist der Hohlraum 5 mit Durchgängen z.B. Bohrungen 7 ausgestattet, welche die Spülluft 13 durch den als Resonator ausgebildeten Hohlraum 5 hindurch in die Brennkammer 4 führen. Die Spülluft 13 wird nach Kühlen des als Resonator ausgebildete Hohlraum 5 der Brennkammer 4 zugeführt und zwar dergestalt, dass diese vollständig an der Verbrennung teilnimmt. Dies wird dadurch gewährleistet, dass der als Resonator ausgebildeten Hohlraum 5 mit der Brennkammer 4 verbunden ist, und zwar dergestalt, dass die Spülluft 13 im wesentlichen an der Eintrittsöffnung 12 der Brennkammer 4 in diese Eintritt. Dies ist von besonderem Vorteil gegenüber den an der Brennkammer 4 bzw. den Brennkammeraußenwänden 20 (Figur 1) selber angebrachten Resonatoren des Stands der Technik (nicht gezeigt), welche mit Kühlluft gekühlt werden, wobei diese Kühlluft erst später, das heißt nicht unmittelbar an der Brennkammereintrittsöffnung 12 in die Brennkammer 4 eintritt, das heißt erst zu einem späteren Zeitpunkt an der Verbrennung teilnimmt und damit die Verbrennungstemperaturen herabsetzt oder zu heißen HotSpots führen kann.

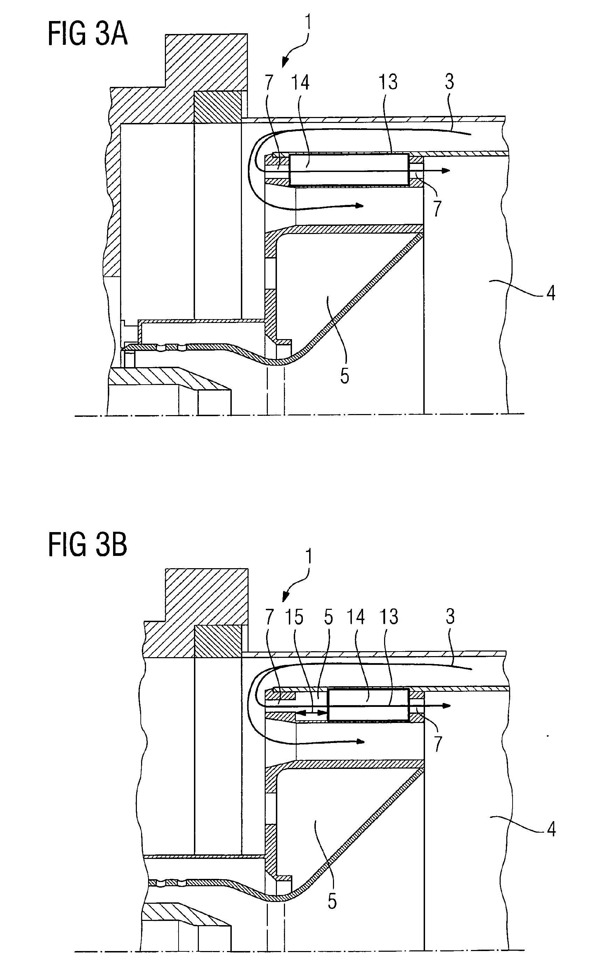

Figur 3a zeigt einen als Resonator ausgebildeten Hohlraum 5, wobei der Resonator als ein fester Einsatz 14 in einem Ringspalt ausgebildet ist. Dieser kann beispielsweise festgeschweißt sein. Je nach Ausführung des Brenners 1 können die Bohrungen 7 brennerseitig und der der brennkammerabgewandeten Seite unterschiedliche geometrische Form als auch unterschiedliche Größe aufweisen. Figur 3b zeigt einen Hohlraum 5 mit variablen Resonatoreinsatz 14. Dieser kann durch Variation der Einsatzgröße 14 verschiedene Frequenzen abdecken. Der Resonatoreinsatz 14 des Hohlraums 5 kann dies beispielsweise durch axiale Ausdehnung 15 oder aber auch durch Ausdehnung in Umfangsrichtung bewerkstelligen. Der Resonatoreinsatz 14 kann dabei in axialer Richtung variable vergrößert oder verkleinert werden d.h. eine variable Ausdehnung 15 aufweisen und somit zur Dämpfung verschiedener Frequenzen ausgebildet sein. Durch diese Unterteilung des als Resonator ausgebildeten Hohlraums 5 können auch hochfrequente Schwingungen gedämpft werden. Auch eine mehrmalige Teilung des als Resonator ausgebildeten Hohlraums 5 und damit die Zerlegung in verschiedene parallele und /oder nachgeschaltete Resonatoren ist möglich. Diese Anordnung hat den Vorteil, dass der Einsatz 14 eine exakt definierte Leckage aufweist.

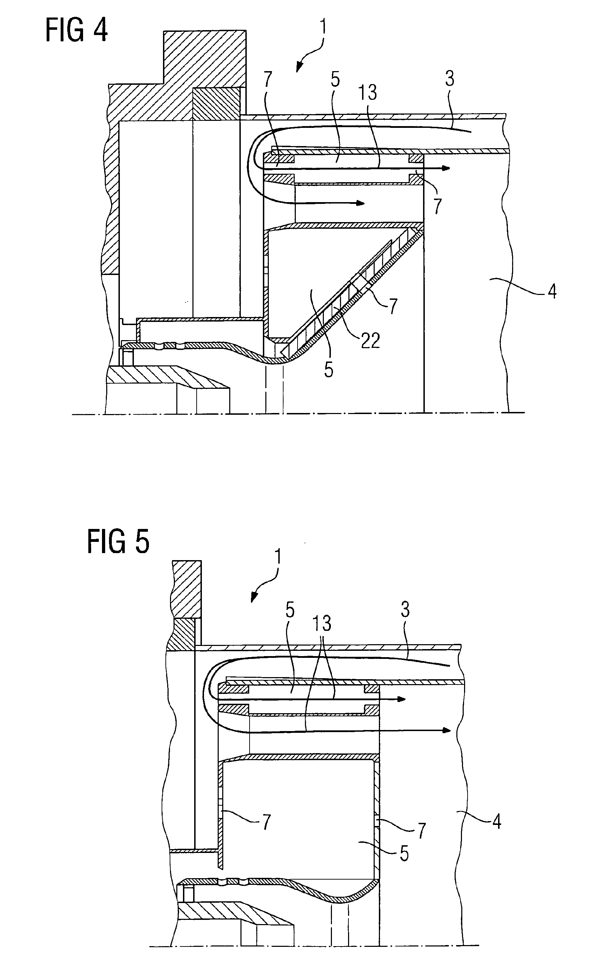

In den als Resonator ausgebildeten Hohlraum 5 (Figur 4) ist die Anbringung eines Kühllufteinsatzes 22 möglich. Dieser weist ein oder mehrere Löcher auf, die mit der Bohrungen 7 verbunden sind, um ein Durchspülen des als Resonator ausgebildeten Hohlraums 5 sicherzustellen. Dieser Kühllufteinsatz 22 kann zusätzlich prall- oder konvektivgekühlt werden. Damit ist eine besonders gute Kühlung des als Resonator ausgebildeten Hohlraums 5 bewerkstelligt.

Figur 5 zeigt eine andere Ausführung des Pilotbrenners. Die sich dadurch ergebenen Hohlräume 5, können wiederum auf den spezifischen Brenner abgestimmt verwendet werden, um durch Bohrungen 7 und z.B. mittels Resonatoreinsatz oder Unterteilung des Hohlraums 5 eine geeignete Dämpfung zu erzielen.

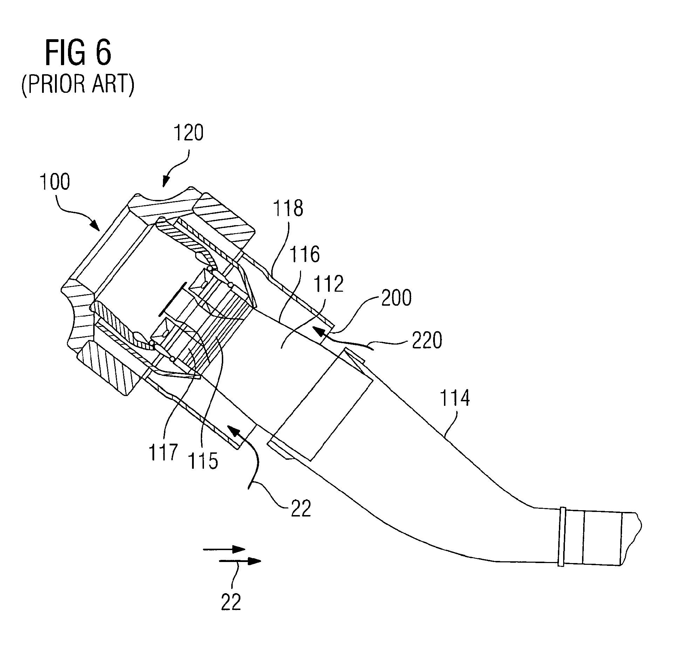

Auch die Anwendung in anderen Brennersystemen beispielsweise in einem Can- oder Can-Annualar System ist möglich. Figur 6 zeigt abschnittweise ein can- bzw. can-annular Brennersystem schematisch.
Der Brenner 100 umfasst ein head-end, ein Überleitkanal 114, und dazwischen einen Liner 116. Dabei wird als "head-end" im Wesentlichen der Teilabschnitt der Kraftstoffeinspritzung 115/Kraftstoff-Luft Vormischung 117 des Brenners bezeichnet.

Der Liner 116 erstreckt sich vom Head-End zu dem Überleitkanal 114 auf beliebige Weise. Während des Betriebs ist aufgrund der hier vorherrschenden Betriebstemperaturen, welche eine Beschädigung des Liners 116 hervorrufen können, eine Kühlung der Brennkammer sowie des Liners 116 notwendig. Hierzu wird in der Ringpassage 200, welche aus einer Umhüllung 118 und dem Liner 116 gebildet wird, Verbrennungs-/Kühlluft 220 eingeströmt. Diese Verbrennungs-/Kühlluft 220 wird anschließend der Brennkammer 112 zugeführt.

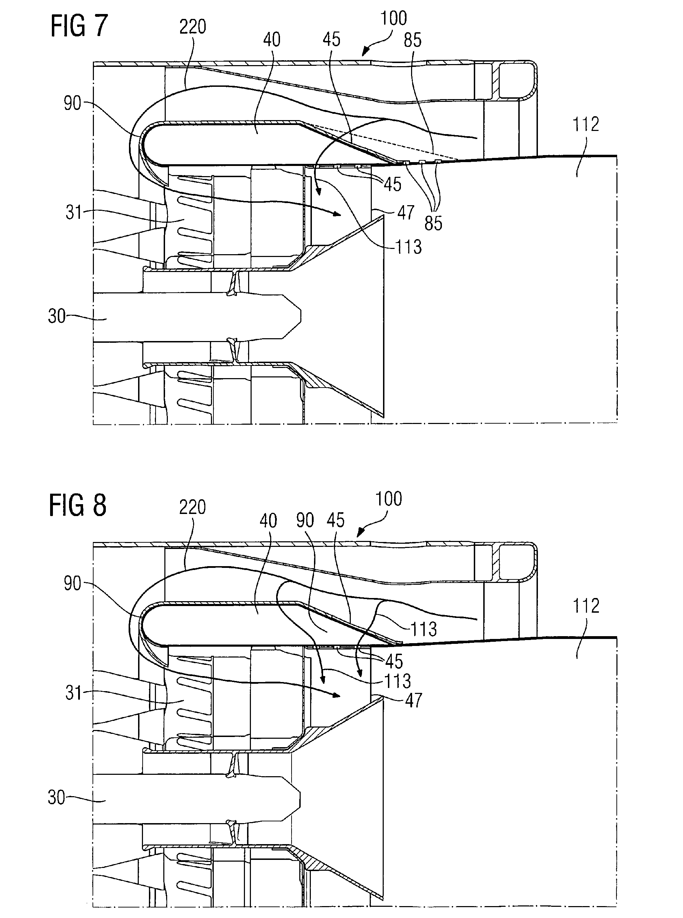

Figur 7 zeigt einen solchen Brenner 100 mit Pilotbrenner 30 sowie einen Swirler 31 mit dem verdrallte Verbrennungsluft, bzw. ein verdralltes Kraftstoff-/Verbrennungsluftgemisch in die Brennkammer 112 eingebracht wird. Der als Resonator ausgebildete Hohlraum 40 kann beispielsweise an einem solchen head-end angebracht werden. Dazu werden Bohrungen 45 angebracht, welche Verbrennungsluft 220 direkt durch den als Resonator ausgebildeten Hohlraum 40 in den head-end Abschnitt leiten und den als Resonator ausgebildeten Hohlraum 40 als Spülluft 113 kühlen. Bevorzugt weist der als ein Resonator ausgebildete Hohlraum 40 ein halbkreisförmiges Ende 90 (3d shell mouth Geometrie)auf. Dies bewirkt, dass der Strom der Verbrennungsluft 220, welche dem Swirler 31 zugeführt wird, nicht unterbrochen oder gestört wird, dadurch dass die Verbrennungsluft 220 teilweise als Spülluft 113 (nur ein möglicher Spülluftstrom gezeigt) verwendet wird, d.h. teilweise den als Resonator ausgebildeten Hohlraum 40 durchströmt. Es können jedoch auch andere beliebige Hohlraum-Geometrien verwendet werden. Der als Resonator ausgeführte Hohlraum 40 kann dabei direkt am head-end Bohrungen 45 aufweisen, welche direkt die sich ausbildende Brennkammerschwingungen am Brennkammereinlass 47 dämpfen oder/und Bohrungen 85, welche in die Hauptverbrennungszone der Brennkammer 112 führen. Eine alternative Kontur ist hier gestrichelt dargestellt. Der Vorteil hierbei ist, dass die Positionierung variabler gestaltet werden kann, um somit Bohrungen zu finden, die eine höhere Dämpfung zulassen.

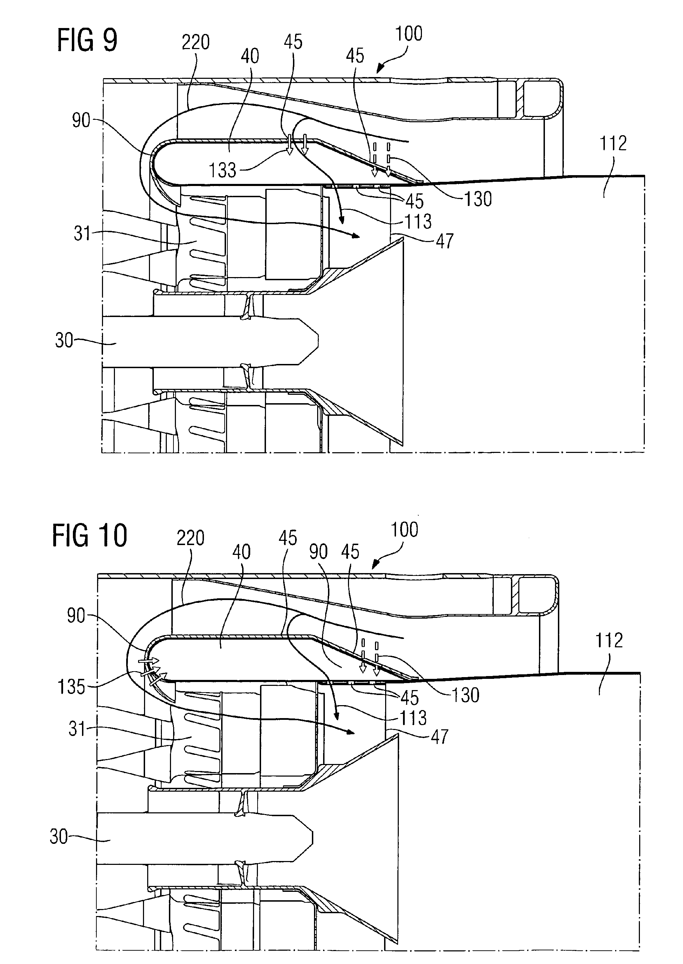

Im als Resonator ausgeführten Hohlraum 40 kann der Hohlraum 40 selber mehrmals unterteilt sein, um verschiedene Frequenzen zu dämpfen( Figur 8). Dabei können eine axiale Unterteilung 90 und/oder eine Unterteilung bzw mehrer Unterteilungen an dem gesamten Umfang möglich sein. Über die axiale und umfängliche Unterteilung werden die laut thermoakustischer Auslegung notwendigen Resonatorvolumen bereitgestellt, um die ermittelten kritischen Frequenzen zu dämpfen. Zusätzlich muss dabei die Länge/Anzahl und der Durchmesser der Bohrungen 45 beachtet werden.
Die Spülluft 113, welche den als Resonator ausgebildeten Hohlraum 40 durchströmt, kann gleichzeitig eine Kühlung, bevorzugt eine Prallkühlung 130, des head-ends und /oder der Brennkammer 112 bewirken (Figur 9). In Figur 9 ist auch eine optimale mögliche Position für eine Grenzschichtabsaugung 133 dargestellt. Figur. 10 stellt eine weitere möglich Positionen für eine Grenzschichtabsaugung 133 dar.

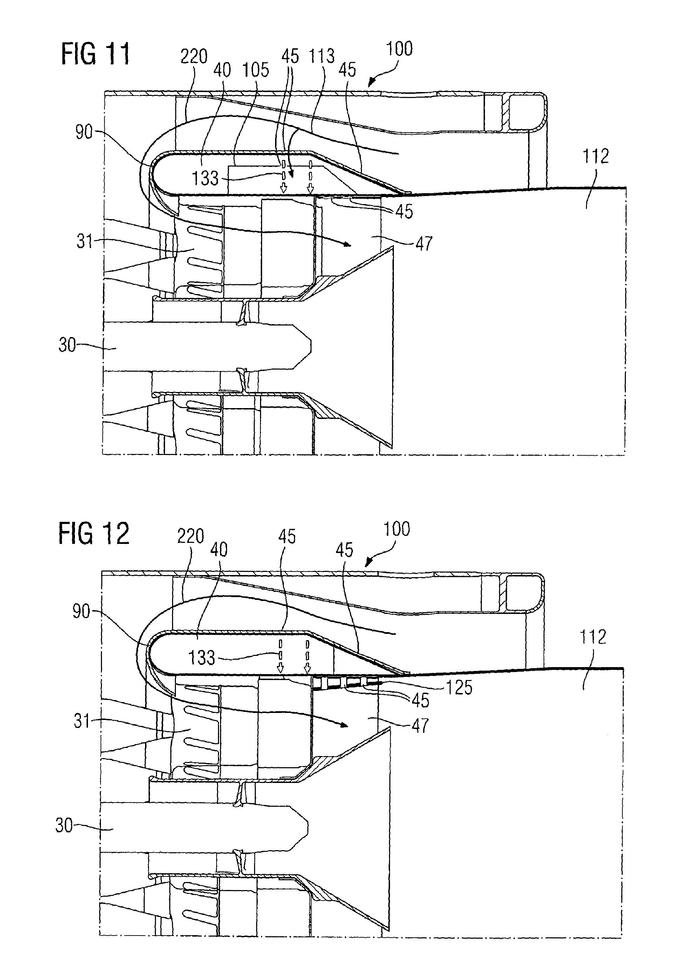

Der Hohlraum 40 kann ebenfalls einen geschweißten Resonatoreinsatz oder einen verstellbaren Resonatoreinsatz aufweisen. Figur 11 zeigt einen geschweißten Einsatz 105, welcher in dem als Resonator ausgebildeten Hohlraum 40 wirkt. Dies hat den Vorteil, dass der Einsatz 105 vorgefertigt werden kann und somit z.B. die Dichtheit besser gewährleistet werden kann. Der Einsatz 105 kann dabei geschweißt oder variable angebracht werden. Ein variabler angebrachter Einsatz kann beispielsweise online verstellbar sein. Mit diesem ist die Dämpfung verschiedener Frequenzen ebenfalls durchführbar. Die Bohrungen 45 können verschiedene Geometrie je nach Notwendigkeit aufweisen. So können neben runde Bohrungen auch elliptische, langloch, oder andere geometrische Formen zum Einsatz kommen.

Figur 12 stellt einen als Resonator ausgebildeten Hohlraum 40 dar, bei dem die Bohrungen 45 mit der Hauptdrallerzeugerverlängerung 125 verbunden sind. Diese Konfiguration lässt sich erzeugen wenn z.B. die hierfür notwendigen Verbindungsrohre direkt an die Hauptdrallerzeugerverlängerung 125 gegossen werden.

Der Hohlraum (5,40) kann auch nur Bohrungen an der der Brenkammer abgewandeten (=kalten Seite) aufweisen, welche Schwingungen im sogenannten Plenum oder im Ringkanal dämpfen

Das hier vorgestellte erfindungsgemäße Konzept, nämlich bereits vorhandene Hohlräume als Resonatoren zu nutzen, ist dabei nicht auf die hier vorgestellten Brenner/Brennertypen eingeschränkt. So ist auch auf Synthesegasbrenner, Silobrenner und auch andere Brenner dieses erfindungsgemäße Konzept anwendbar.

## Patentansprüche

1. Vorrichtung zur Dämpfung von Verbrennungsschwingungen in einer Brennkammer,
**dadurch gekennzeichnet, dass** mindestens ein an oder/und im Brenner angebrachter Hohlraum (5,40) vorhanden ist, welcher mit dem Brenner (1,100) und/oder der Brennkammer (4,112) derart verbunden ist, so dass sich in dem mindestens einen Hohlraum (5,40) Schwingungen ausbilden, welche zur Dämpfung der thermoakustischen Brennkammerschwingung verwendbar sind und wobei der mindestens eine vorhandene Hohlraum (5,40) mit Spülluft (13,113) kühlbar ist.

2. Vorrichtung nach Anspruch 1,
**dadurch gekennzeichnet, dass** der mindestens eine vorhandene Hohlraum (5,40) durch mindestens ein Loch mit der Brennkammer (4,112) verbunden ist.

3. Vorrichtung nach Anspruch 2,
**dadurch gekennzeichnet, dass** das mindestens eine Loch eine Bohrung ist.

4. Vorrichtung nach einem der Ansprüche 1-3,
**dadurch gekennzeichnet, dass** der mindestens eine vorhandene Hohlraum (5,40) durch Prallkühlung und/oder Konvektivkühlung kühlbar ist.

5. Vorrichtung nach einem der Ansprüche 1-4,
**dadurch gekennzeichnet, dass** der mindestens eine Hohlraum (5,40) unterteilbar ist, so dass verschiedene Schwingungsfrequenzen gedämpft werden.

6. Vorrichtung nach einem der Ansprüche 1-5,
**dadurch gekennzeichnet, dass** der mindestens eine Hohlraum (5,40) an der der Brennkammer (4,112) zugewandten Umfangsseite des Brenners (1,100) angeordnet ist.

7. Vorrichtung nach einem der Ansprüche 1-6,
**dadurch gekennzeichnet, dass** mindestens zwei Hohlräume (5,40) vorgesehen sind, die ein gleich großes Volumen aufweisen.

8. Vorrichtung nach einem der vorhergehenden Ansprüche,
**dadurch gekennzeichnet, dass** der mindestens eine Hohlraum (5,40) als Helmholzresonator oder Lamda/4 Resonator (11) ausgestaltet ist.

9. Gasturbine mit einer Vorrichtung nach einer der Ansprüche 1-8.

10. Verfahren zur Dämpfung von Verbrennungsschwingungen in einer Brennkammer (4,112),
**dadurch gekennzeichnet, dass** mindestens ein an oder/und im Brenner(1,100) angebrachter Hohlraum (5,40) vorhanden ist, welcher mit dem Brenner (1,100) und/oder Brennkammer (4,112) derart verbunden ist, dass sich in dem mindestens einen Hohlraum (5,40) Schwingungen ausbilden, welche zur Dämpfung der Brennkammerschwingungen verwendet werden und wobei der mindestens eine vorhandene Hohlraum (1,100) mit Spülluft (13,113) gekühlt wird.

11. Verfahren nach Anspruch 10,
**dadurch gekennzeichnet, dass** die Spülluft (13,113) in der Brennkammer (4,112) nahezu vollständig an der Verbrennung teilnimmt.

12. Verfahren nach einem der Ansprüche 10-11,
**dadurch gekennzeichnet, dass** der Hohlraum (4,50) in seiner akustischen Funktionsweise als Helmholzresonator oder Lambda/4 Resonator wirkt.
